# FASCICULE DE BREVET EUROPEEN

(11) **EP 2 743 507 B1**
(45) Date de publication et mention de la délivrance du brevet: **14.10.2015**
(21) Numéro de dépôt: 13192692.5
(22) Date de dépôt: 13.11.2013
(51) Int. Cl.: F04D 13/12, F04D 15/00, G01F 1/80, G01F 1/34

(54) **Procédé de commande pour système multipompes mis en oeuvre sans capteur et système multipompes**
Verfahren zur sensorlosen Steuerung einer Mehrpumpenanlage und Mehrpumpensystem
Sensorless control method for a multipump system and multipump system

(30) Priorité: 17.12.2012 FR 1262147
(43) Date de publication de la demande: 18.06.2014
(73) Titulaire: Schneider Toshiba Inverter Europe SAS, 27120 Pacy sur Eure (FR)
(72) Inventeur: Coin, Sylvain, 27220 BRETAGNOLLES (FR)
(74) Mandataire: Bié, Nicolas

(56) Documents cités:
- JP-A- 2001 342 966
- JP-A- 2004 124 814
- JP-A- 2006 307 682
- US-A1- 2004 064 292

## Description

### Domaine technique de l'invention

La présente invention se rapporte à un procédé de commande pour système multipompes.

### Etat de la technique

Un système multipompes comporte au moins deux pompes, au moins l'une de ces deux pompes étant à vitesse variable contrôlée en vitesse par un variateur de vitesse et l'autre à vitesse fixe ou à vitesse variable. Dans le système multipompes, les deux pompes sont connectées en parallèle à un même conduit d'entrée et leurs sorties se rejoignent dans un conduit de sortie commun.

Certaines solutions de commande d'un système multipompes nécessitent une mesure de débit total sur le conduit de sortie. Pour mesurer ce débit les solutions actuelles emploient un débitmètre ou utilisent des méthodes peu satisfaisantes. C'est le cas notamment des brevets JP2004-124814 et JP2006-307682. Un besoin existe donc aujourd'hui de pouvoir estimer de manière simple, avec un minimum d'installation, le débit total d'un fluide circulant dans le conduit de sortie d'un système multipompes.

Le but de l'invention est donc de proposer un procédé de commande mis en oeuvre dans une unité de traitement, permettant de pouvoir déterminer le débit total d'un fluide circulant à travers le conduit de sortie, sans l'emploi d'un débitmètre, ce procédé étant simple à mettre en oeuvre et ne nécessitant qu'un minimum de capteurs.

### Exposé de l'invention

Ce but est atteint par un procédé de commande mis en oeuvre dans une unité de traitement employée dans la commande d'un système multipompes, ledit système multipompes comprenant un conduit d'entrée destiné à recevoir un fluide, deux pompes connectées en parallèle audit conduit d'entrée et un conduit de sortie relié aux sorties des deux pompes, au moins l'une des deux pompes étant commandée par un variateur de vitesse, chaque pompe étant définie par une première courbe caractéristique débit-hauteur manométrique à vitesse maximale et par une deuxième courbe caractéristique débit-puissance reçue, le procédé de commande comportant les étapes suivantes :
- détermination du débit de la pompe contrôlée par le variateur de vitesse à partir de la deuxième courbe caractéristique, d'une vitesse estimée de la dite pompe et d'une puissance fournie à ladite pompe par le variateur de vitesse,
- détermination de la hauteur manométrique de ladite pompe contrôlée par le variateur de vitesse à partir du débit déterminé et de la première courbe caractéristique de ladite pompe,
- détermination du débit de chaque pompe du système multipompes à partir de la hauteur manométrique déterminée, de la vitesse de chaque pompe et de la première courbe caractéristique,
- détermination du débit total du système multipompes par addition des débits obtenus pour chaque pompe.

Selon une particularité, la vitesse de la pompe contrôlée par le variateur de vitesse est déterminée à partir de la référence de vitesse injectée dans une boucle de régulation ou d'une mesure de vitesse.

L'invention concerne également un variateur de vitesse comportant une unité de traitement agencée pour mettre en oeuvre le procédé de commande tel que défini ci-dessus.

### Brève description des figures

D'autres caractéristiques et avantages vont apparaître dans la description détaillée qui suit faite en regard des dessins annexés listés ci-dessous :
- la figure 1 représente un système multipompes, l'une des pompes étant commandée par un variateur de vitesse,
- la figure 2 illustre, de manière schématique, le principe de fonctionnement du procédé de commande de l'invention.

### Description détaillée d'au moins un mode de réalisation

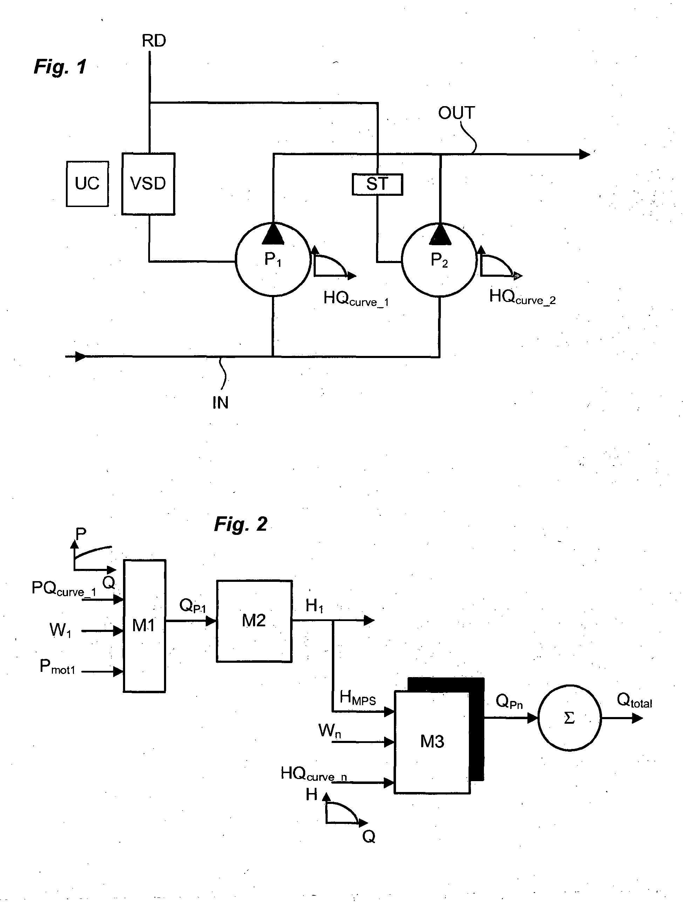

En référence à la figure 1, un système multipompes comporte au moins deux pompes P₁, P₂ connectées en parallèle. Chaque pompe est par exemple de type centrifuge et est destiné à aspirer un fluide par une entrée et à le refouler par une sortie. Une pompe peut être à vitesse variable (P₁), contrôlée par un variateur de vitesse VSD, ou à vitesse fixe (P₂) commandée par un simple démarreur ST. Dans un système multipompes, au moins l'une des deux pompes est à vitesse variable, tandis que l'autre peut être à vitesse variable ou à vitesse fixe.

Dans la suite de la description, nous considérerons un système multipompes à seulement deux pompes P₁, P₂ (désignées Pₙ de manière générale). Bien entendu, l'invention peut tout à fait s'appliquer à un système comportant plus de deux pompes.

Dans le système multipompes, les deux pompes P₁, P₂ employées sont reliées en parallèle. Elles sont alimentées par un réseau de distribution électrique RD. Ainsi, le système comporte un conduit d'entrée IN commun joignant les entrées des deux pompes P₁, P₂ et un conduit de sortie OUT commun joignant les sorties des deux pompes P₁, P₂. La pompe P₁ est commandée par un variateur de vitesse VSD.

Par ailleurs, de manière connue, chaque pompe P₁, P₂ est définie par une première courbe caractéristique de pompe (HQ_{curve_1}, HQ_{curve_2} désignée de manière générale HQ_{curve_n}). Cette courbe illustre la relation existant entre la hauteur manométrique H de la pompe et son débit volumique Q à vitesse maximale. La hauteur manométrique H de la pompe s'exprime en mètre tandis que le débit volumique Q s'exprime par exemple en m³/heure. Chaque pompe est également définie par une deuxième courbe caractéristique de pompe (PQ_{curve_1}, PQ_{curve_2} désignée de manière générale PQ_{curve_n}) exprimant la relation entre la puissance fournie au moteur de la pompe et le débit Q_{Pn} en sortie de la pompe à vitesse maximale.

Le procédé de commande de l'invention est mis en oeuvre dans une unité de traitement UC. Cette unité de traitement UC est par exemple incluse dans le variateur de vitesse VSD employé pour le contrôle d'une ou plusieurs pompes du système multipompes.

Le procédé de commande de l'invention présente la particularité de fonctionner sans aucun capteur.

La figure 2 illustre le principe de fonctionnement de l'invention. L'unité de traitement UC lance un premier module logiciel M1 permettant d'estimer le débit de la pompe P₁ contrôlée par le variateur de vitesse VSD. Pour cela, le premier module logiciel M1 reçoit en entrée :
- la vitesse W₁ de la pompe P₁ contrôlée par le variateur de vitesse VSD, cette vitesse pouvant être estimée à partir de la référence de vitesse injectée dans la boucle de régulation du variateur de vitesse ou mesurée à l'aide d'un capteur,
- la puissance Pₘₒₜ₁ fournie à la pompe P₁ contrôlée par le variateur de vitesse, cette puissance étant estimée à partir des données du variateur de vitesse VSD,
- la deuxième courbe caractéristique PQ_{curve_1} de la pompe P₁ considérée, qui sera extrapolée à la vitesse W₁ de la pompe P_{1,} en utilisant les lois d'affinité des pompes centrifuges.

Une fois le débit Q_{P1} en sortie de la pompe P₁ déterminé, l'unité de traitement UC lance un deuxième module logiciel M2 permettant de déterminer la hauteur manométrique H₁ associée à ce débit. Pour cela, le deuxième module logiciel M2 s'appuie sur la première courbe caractéristique HQ_{curve_1} de la pompe P₁.

Au point de fonctionnement considéré, la hauteur manométrique H_{MPS} du système multipompes est identique pour toutes les pompes Pₙ, que celles-ci soient à vitesse fixe ou à vitesse variable. Par conséquent, la hauteur manométrique H₁ déterminée correspond à la hauteur manométrique H_{MPS} du système multipompes.

Une fois la hauteur manométrique H_{MPS} déterminée, l'unité de traitement UC lance, pour chaque pompe Pₙ, un troisième module logiciel M3 permettant de déterminer le débit Q_{Pn} en sortie de la pompe. Ce module M3 reçoit en entrée les valeurs suivantes :
- la valeur de la hauteur manométrique H_{MPS} déterminée,
- une valeur de la vitesse Wₙ de la pompe considérée dans le système multipompes,
- la courbe caractéristique débit/hauteur manométrique (HQ_{curve_n}) de la pompe dont le débit est recherché, qui sera extrapolée à la vitesse Wₙ de la pompe, en utilisant les lois d'affinité des pompes centrifuges.

La vitesse Wₙ de la pompe peut être issue de différentes sources. Pour une pompe à vitesse variable, cette vitesse peut être basée sur la référence de vitesse appliquée en entrée de la boucle de régulation du variateur de vitesse ou sur une mesure de vitesse. Pour une pompe à vitesse fixe, il s'agit juste de tenir compte de la dynamique de fonctionnement de la pompe.

Une fois que l'unité de traitement UC a déterminé le débit Q_{Pn} du fluide en sortie de chaque pompe, il ne lui reste plus qu'à additionner ces débits pour obtenir le débit total Qₜₒₜₐₗ.

## Revendications

1. Procédé de commande mis en oeuvre dans une unité de traitement (UC) employée dans la commande d'un système multipompes, ledit système multipompes comprenant un conduit d'entrée (IN) destiné à recevoir un fluide, deux pompes (P₁, P₂) connectées en parallèle audit conduit d'entrée et un conduit de sortie relié aux sorties des deux pompes (P₁, P₂), au moins l'une des deux pompes étant commandée par un variateur de vitesse (VSD), chaque pompe (P₁, P₂) étant définie par une première courbe caractéristique (HQ_{curve_n}) débit-hauteur manométrique à vitesse maximale et par une deuxième courbe caractéristique (PQ_{curve_n}) débit-puissance reçue, le procédé de commande comportant les étapes suivantes :
- détermination du débit (Q_{P1}) de la pompe contrôlée par le variateur de vitesse (VSD) à partir de la deuxième courbe caractéristique (PQ_{curve_n}), d'une vitesse (W₁) estimée de la dite pompe et d'une puissance fournie à ladite pompe par le variateur de vitesse (VSD),
- détermination de la hauteur manométrique (H_{MPS}) de ladite pompe (P₁) contrôlée par le variateur de vitesse à partir du débit (Q_{P1}) déterminé et de la première courbe caractéristique (HQ_{curve_1}) de ladite pompe,
- détermination du débit (Q_{Pn}) de chaque pompe (Pₙ) du système multipompes à partir de la hauteur manométrique (H_{MPS}) déterminée, de la vitesse (Wₙ) de chaque pompe et de la première courbe caractéristique (HQ_{curve_n}),
- détermination du débit total (Qₜₒₜₐₗ) du système multipompes par addition des débits (Q_{Pn}) obtenus pour chaque pompe.

2. Procédé selon la revendication 1, **caractérisé en ce que** la vitesse de la pompe (Wₙ) contrôlée par le variateur de vitesse est déterminée à partir de la référence de vitesse injectée dans une boucle de régulation ou d'une mesure de vitesse.

3. Système multipompes comprenant un conduit d'entrée (IN) destiné à recevoir un fluide, deux pompes (P₁, P₂) connectées en parallèle audit conduit d'entrée et un conduit de sortie relié aux sorties des deux pompes (P₁, P₂), au moins l'une des deux pompes étant commandée par un variateur de vitesse (VSD), chaque pompe (P₁, P₂) étant définie par une première courbe caractéristique (HQ_{curve_n}) débit-hauteur manométrique à vitesse maximale et par une deuxième courbe caractéristique (PQ_{curve_n}) débit-puissance reçue, ledit système comportant une unité de traitement (UC) comprenant :
- un module de détermination du débit (QP₁) de la pompe contrôlée par le variateur de vitesse (VSD) à partir de la deuxième courbe caractéristique (PQ_{curve_n}), d'une vitesse (W₁) estimée de la dite pompe et d'une puissance fournie à ladite pompe par le variateur de vitesse (VSD),
- un module de détermination de la hauteur manométrique (H_{MPS}) de ladite pompe (P₁) contrôlée par le variateur de vitesse à partir du débit (Q_{P1}) déterminé et de la première courbe caractéristique (HQ_{curve_1}) de ladite pompe,
- un module de détermination du débit (Q_{Pn}) de chaque pompe (Pₙ) du système multipompes à partir de la hauteur manométrique (H_{MPS}) déterminée, de la vitesse (Wₙ) de chaque pompe et de la première courbe caractéristique (HQ_{curve_n}),
- des moyens de détermination du débit total (Qₜₒₜₐₗ) du système multipompes par addition des débits (Q_{Pn}) obtenus pour chaque pompe.

4. Système selon la revendication 3, **caractérisé en ce que** la vitesse de la pompe (Wₙ) contrôlée par le variateur de vitesse est déterminée à partir de la référence de vitesse injectée dans une boucle de régulation ou d'une mesure de vitesse.

## Patentansprüche

1. Steuerungsverfahren, das in einer Bearbeitungseinheit (UC) eingesetzt wird, die bei der Steuerung eines Mehrpumpensystems verwendet wird, wobei das Mehrpumpensystem eine Eingangsleitung (IN), die dazu bestimmt ist, ein Fluid aufzunehmen, zwei Pumpen (P₁, P₂), die parallel an die Eingangsleitung angeschlossen sind, und eine Ausgangsleitung umfasst, die mit den Ausgängen der beiden Pumpen (P₁, P₂) verbunden ist, wobei mindestens eine der beiden Pumpen von einem Geschwindigkeitsregler (VSD) gesteuert wird, wobei jede Pumpe (P₁, P₂) durch eine erste charakteristische Kurve (HQ_{curve_n}) Durchflussmengemanometrische Höhe bei Maximalgeschwindigkeit und durch eine zweite charakteristische Kurve (PQ_{curve_n}) Durchflussmenge-empfangene Leistung definiert ist, wobei das Steuerungsverfahren die folgenden Schritte umfasst:
- Bestimmen der Durchflussmenge (Q_{P1}) der Pumpe, die von dem Geschwindigkeitsregler (VSD) auf Basis der zweiten charakteristischen Kurve (PQ_{curve_n}) kontrolliert wird, einer geschätzten Geschwindigkeit (W₁) der Pumpe und einer an die Pumpe von dem Geschwindigkeitsregler (VSD) gelieferten Leistung,
- Bestimmen der manometrischen Höhe (H_{MPS}) der Pumpe (P₁), die von dem Geschwindigkeitsregler rauf Basis der bestimmten Durchflussmenge (Q_{P1}) kontrolliert wird, und der ersten charakteristischen Kurve (HQ_{curve_1}) der Pumpe,
- Bestimmen der Durchflussmenge (Q_{Pn}) jeder Pumpe (Pₙ) des Mehrpumpensystems auf Basis der bestimmten manometrischen Höhe (H_{MPS}), der Geschwindigkeit (Wₙ) jeder Pumpe und der ersten charakteristischen Kurve (HQ_{curve_n}),
- Bestimmen der Gesamtdurchflussmenge (Qₜₒₜₐₗ) des Mehrpumpensystems durch Addition der für jede Pumpe erhaltenen Durchflussmengen (Q_{Pn}).

2. Verfahren nach Anspruch 1, **dadurch gekennzeichnet, dass** die Geschwindigkeit der Pumpe (Wₙ), die von dem Geschwindigkeitsregler kontrolliert wird, auf Basis der Geschwindigkeitsreferenz, die in eine Regelschleife eingeleitet wird, oder einer Geschwindigkeitsmessung bestimmt wird.

3. Mehrpumpensystem, umfassend eine Eingangsleitung (IN), die dazu bestimmt ist, ein Fluid aufzunehmen, zwei Pumpen (P₁, P₂), die parallel an die Eingangsleitung angeschlossen sind, und eine Ausgangsleitung, die mit den Ausgängen der beiden Pumpen (P₁, P₂) verbunden ist, wobei mindestens eine der beiden Pumpen von einem Geschwindigkeitsregler (VSD) gesteuert wird, wobei jede Pumpe (P₁, P₂) durch eine erste charakteristische Kurve (HQ_{curve_n}) Durchflussmengemanometrische Höhe bei Maximalgeschwindigkeit und durch eine zweite charakteristische Kurve (PQ_{curve_n}) Durchflussmenge-empfangene Leistung definiert ist, wobei das System eine Bearbeitungseinheit (UC) umfasst, umfassend:
- ein Modul zum Bestimmen der Durchflussmenge (QP₁) der Pumpe, die von dem Geschwindigkeitsregler (VSD) auf Basis der zweiten charakteristischen Kurve (PQ_{curve_n}) kontrolliert wird, einer geschätzten Geschwindigkeit (W₁) der Pumpe und einer an die Pumpe von dem Geschwindigkeitsregler (VSD) gelieferten Leistung,
- ein Modul zum Bestimmen der manometrischen Höhe (H_{MPS}) der Pumpe (P₁), die von dem Geschwindigkeitsregler auf Basis der bestimmten Durchflussmenge (Q_{P1}) kontrolliert wird, und der ersten charakteristischen Kurve (HQ_{curve_1}) der Pumpe,
- ein Modul zum Bestimmen der Durchflussmenge (Q_{Pn}) jeder Pumpe (Pₙ) des Mehrpumpensystems auf Basis der bestimmten manometrischen Höhe (H_{MPS}), der Geschwindigkeit (Wₙ) jeder Pumpe und der ersten charakteristischen Kurve (HQ_{curve_n}),
- Mittel zum Bestimmen der Gesamtdurchflussmenge (Qₜₒₜₐₗ) des Mehrpumpensystems durch Addition der für jede Pumpe erhaltenen Durchflussmengen (Q_{Pn}).

4. System nach Anspruch 3, **dadurch gekennzeichnet, dass** die Geschwindigkeit der Pumpe (Wₙ), die vom Geschwindigkeitsregler kontrolliert wird, auf Basis der Geschwindigkeitsreferenz, die in eine Regelschleife eingeleitet wird, oder einer Geschwindigkeitsmessung bestimmt wird.

## Claims

1. Control method implemented in a processing unit (UC) used in the control of a multipump system, said multipump system comprising an inlet passage (IN) intended to receive a fluid, two pumps (P₁, P₂) connected in parallel to said inlet passage and an outlet passage connected to the outlets of the two pumps (P₁, P₂), at least one of the two pumps being controlled by a variable speed drive (VSD), each pump (P₁, P₂) being defined by a first characteristic curve (HQ_{curve_n}), flow rate-manometric head at maximum speed, and by a second characteristic curve (PQ_{curve_n}), flow rate-received power, the control method comprising the following steps:
- determination of the flow rate (Q_{P1}) of the pump controlled by the variable speed drive (VSD) from the second characteristic curve (PQ_{curve_n}), from an estimated speed (W₁) of said pump and from the power supplied to said pump by the variable speed drive (VSD),
- determination of the manometric head (H_{MPS}) of said pump (P₁) controlled by the variable speed drive from the determined flow rate (Q_{P1}) and from the first characteristic curve (HQ_{curve_1}) of said pump,
- determination of the flow rate (Q_{Pn}) of each pump (Pₙ) of the multipump system from the determined manometric head (H_{MPS}), from the speed (Wₙ) of each pump and from the first characteristic curve (HQ_{curve_n}),
- determination of the total flow rate (Qₜₐₜₐₗ) of the multipump system by addition of the flow rates (Q_{Pn}) obtained for each pump.

2. Method according to Claim 1, **characterized in that** the speed of the pump (Wₙ) controlled by the variable speed drive is determined from the speed reference injected into a control loop or from a speed measurement.

3. Multipump system comprising an inlet passage (IN) intended to receive a fluid, two pumps (P₁, P₂) connected in parallel to said inlet passage and an outlet passage connected to the outlets of the two pumps (P₁, P₂), at least one of the two pumps being controlled by a variable speed drive (VSD), each pump (P₁, P₂) being defined by a first characteristic curve (HQ_{curve_n}), flow rate-manometric head at maximum speed, and by a second characteristic curve (PQ_{curve_n}), flow rate-received power, said system including a processing unit (UC) comprising:
- a module for the determination of the flow rate (QP₁) of the pump controlled by the variable speed drive (VSD) from the second characteristic curve (PQ_{curve_n}), from an estimated speed (W₁) of said pump and from the power supplied to said pump by the variable speed drive (VSD),
- a module for the determination of the manometric head (H_{MPS}) of said pump (P₁) controlled by the variable speed drive from the determined flow rate (Q_{P1}) and from the first characteristic curve (HQ_{curve_1}) of said pump,
- a module for the determination of the flow rate (Q_{Pn}) of each pump (Pₙ) of the multipump system from the determined manometric head (H_{MPS}), from the speed (Wₙ) of each pump and from the first characteristic curve (HQ_{curve_n}),
- means for the determination of the total flow rate (Qₜₒₜₐₗ) of the multipump system by addition of the flow rates (Q_{Pn}) obtained for each pump.

4. System according to Claim 3, **characterized in that** the speed of the pump (Wₙ) controlled by the variable speed drive is determined from the speed reference injected into a control loop or from a speed measurement.
